Europäisches Patentamt

European Patent Office

Office européen des brevets

(19)

(11) **EP 1 596 243 A1**

(12) **EUROPEAN PATENT APPLICATION**

(43) Date of publication:
**16.11.2005 Bulletin 2005/46**

(51) Int Cl.⁷: **G02F 1/01**, G02B 6/28

(21) Application number: **05010179.9**

(22) Date of filing: **11.05.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **15.05.2004 KR 2004034556**

(71) Applicant: **LG ELECTRONICS INC.
Seoul (KR)**

(72) Inventor: **Ahn, Seh-Won
Songpa-Gu, Seoul (KR)**

(74) Representative: **Zech, Stefan Markus et al
Meissner, Bolte & Partner
Postfach 10 26 05
86016 Augsburg (DE)**

(54) **Optical true-time delay apparatus and manufacturing method thereof**

(57) Provided are an optical true-time delay apparatus and a manufacturing method thereof. The optical true-time delay apparatus comprises: an optical fiber composed of a core layer and a cladding layer wrapping the core layer, and having a taper portion formed at a certain part of an outer circumferential surface of the cladding layer, a distance from the taper portion to the core layer being gradually changed along a length direction of the taper portion; a bragg grating formed at a uniform interval in the core layer placed within the section in which the taper portion is formed; and a heating portion formed on a part of the taper portion corresponding to the part where the bragg grating is formed along a length direction of the optical fiber for thereby wrapping the taper portion.

FIG. 2

EP 1 596 243 A1

**Description**

BACKGROUND OF THE INVENTION

1. Field of the Invention

The present invention relates to an optical true-time delay apparatus and a manufacturing method thereof, and particularly, to an optical true-time delay apparatus for successively controlling a transfer time of an optical signal loading a radio frequency (RF) signal therein and a manufacturing method thereof.

2. Description of the Background Art

Recently, radio traffic has been drastically increased by a rapid popularization of such mobile communication terminals, wireless LAN, home network, electronic commerce, electronic conference, and the like. Since those radio communications system and terminals sensitively react to peripheral communication circumstances, there has been required for an antenna system for dealing with a change of the peripheral communication circumstances. In particular, in case of the mobile communication terminal and the wireless LAN, call quality is sensitive to the peripheral circumstances such as a traffic by an adjacent user and a position thereof. Accordingly, in order to maintain a superior communication quality by dealing with the change of the peripheral communication circumstances, an array type antenna has been used such that a transmission/reception distribution of electric waves can actively be adjusted according to a request for communication. When using this array type antenna, it is possible to adjust an intended angle of RF signal beams which are discharged by differentially delaying an RF signal applied to a plurality of element antenna. For this reason, a true-time delay apparatus for delaying signals appropriately is a core element of the array type antenna.

In the conventional art, because an electric switch using a phase control method was used as the true-time delay apparatus, it was disadvantageous in aspect of a whole size and an accuracy thereof. However, a true-time delay apparatus using an optical effect has recently been used instead of the electric switch.

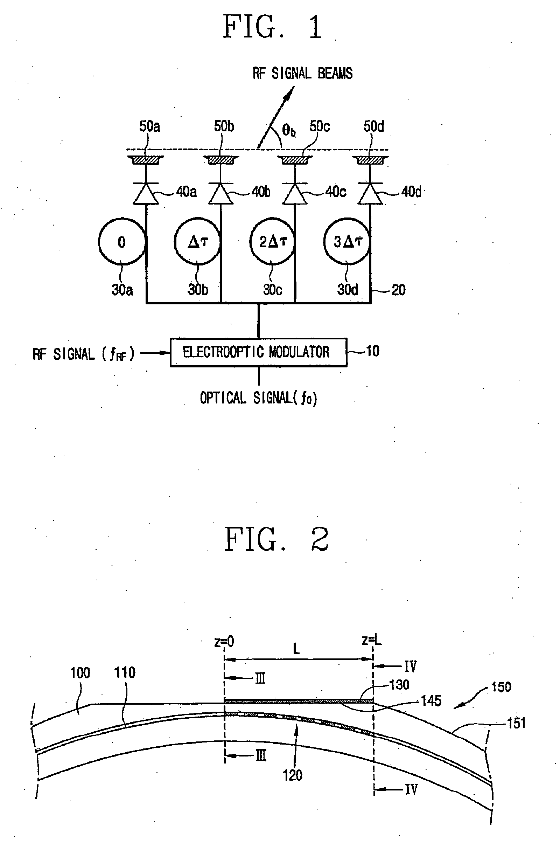

Figure 1 briefly shows a configuration of a typical phase array antenna system using an optical true-time delay unit, and particularly a configuration of an array type antenna structure using an optical RF true-time delay line. As shown in the drawing, four element antennas 50a-50d are connected to optical true-time delay units 30a-30d, respectively.

A method for optically adjusting transmission/reception distribution of an RF signal can be explained on the basis a structure of the phase array antenna system shown in Figure 1 as follows.

An RF signal $f_{RF}$ to be transmitted is applied to an electrooptic modulator 10 to be loaded in an optical signal $f_0$ which is used as a carrier. The RF signal $f_{RF}$ loaded in the optical signal $f_0$ is then provided to optical fiber lines 20 connected to the optical true-time delay units 30a-30d, thereby adjusting a delay time ($\Delta_T$ unit) which is established respectively in the optical true-time delay units 30a-30d. This delayed optical signal is restored to the RF signal by optical detectors 40a-40d. Afterwards, the element antennas 50a-50d are driven to adjust a distribution of RF signal beams which are transmitted and received therefrom and thereto.

Here, the optical true-time delay units 30a-30d, as delay lines formed at parts of the optical fiber line 20, are configured to have a time delay for each of them by $\Delta_T$ unit. The optical true-time delay units 30a-30d determine a scanning direction of the RF signal beams transmitted and received through the element antennas 50a-50d.

Thus, in the conventional art, the optical true-time delay units 30a-30d has generally used a type that an optical fiber bragg grating, which has a characteristic that only a signal with a specific wavelength is reflected, is introduced to the optical fiber itself. That is, the bragg grating structure corresponding to a fixed wavelength is formed on the optical line so as to allow an applied wavelength to be reflected at a certain part, and then the reflected beam is re-received to thereby generate a delay.

There are broadly two delay methods using the conventional bragg grating structure. In one method thereof, there is used a chirped fiber bragg grating in which a period of the grating is changed along an ongoing direction of an optical signal and thusly an optical wavelength reflected at each point becomes different. That is, the optical wavelength to be inputted is changed such that the optical wavelength goes on toward the bragg grating structure and thusly changes a reflection point at which the optical wavelength is reflected by the grating structure. As a result, a delay time of the RF signal loaded in the optical wavelength can be adjusted. For this method, because the delay time is changed by varying a wavelength of the optical signal in which the RF signal is loaded and accordingly adjusting a position where the optical signal is reflected at the bragg grating, a wavelength variable light source is inevitably required. However, a cost for the wavelength variable light source is considerably high, which results in an increase of manufacturing cost.

In the other method thereof, the delay time of the optical signal to be reflected is adjusted by physically varying the grating structure by means of a physical transformation of the line (e.g., curving or pressing the line) in which the bragg grating is formed, in addition to the change of the wavelength. However, for this method, there is required a mechanical movement for physically transforming the line in which the bragg grating is formed. As a result, a size of the delay unit is enlarged and reproducibility and reliability thereof are decreased due to a mechanical fatigue. In addition, it is difficult to successively drive the delay units at high speed.

## SUMMARY OF THE INVENTION

Therefore, in order to solve those problems, an object of the present invention is to provide an optical true-time delay apparatus for successively and precisely controlling a true-time delay of an RF signal electrically without a mechanical movement by using an optical fiber having a bragg grating with a characteristic that an effective index of refraction thereof is changed according to a variation of temperature, and a manufacturing method thereof.

To achieve these and other advantages and in accordance with the purpose of the present invention, as embodied and broadly described herein, there is provided an optical true-time delay apparatus comprising: an optical fiber composed of a core layer and a cladding layer wrapping the core layer, and having a taper portion formed at a certain part of an outer circumferential surface of the cladding layer, a distance from the taper portion to the core layer being gradually changed along a length direction of the taper portion; a bragg grating formed at a uniform interval in the core layer placed within the section in which the taper portion is formed; and a heating portion formed on a part of the taper portion corresponding to the part where the bragg grating is formed along a length direction of the optical fiber for thereby wrapping the taper portion.

According to another embodiment of the present invention, there is provided a method for manufacturing an optical true-time delay apparatus comprising the steps of: forming a groove on a substrate having a predetermined radius of curvature in a depth direction of the substrate and extended forwardly to a length direction of the substrate; inserting an optical fiber with a uniform bragg grating into the groove which is thereafter filled with an adhesive agent, and thusly fixing the optical fiber with being curved along a bottom surface of the groove; polishing a part of the optical fiber corresponding to a part where the bragg grating is formed, the adhesive agent, and a part of the substrate, and thereby forming a taper portion in the optical fiber; and forming a heating portion on the taper portion.

The foregoing and other objects, features, aspects and advantages of the optical true-time delay apparatus and the manufacturing method thereof according to the present invention will become more apparent from the following detailed description of the present invention when taken in conjunction with the accompanying drawings.

## BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Figure 1 is a format diagram of a phase array antenna system having a typical true-time delay unit;
Figure 2 is a sectional view showing an optical true-time delay apparatus according to an embodiment of the present invention;
Figure 3 is a sectional view taken along line III-III shown in Figure 1;
Figure 4 is a sectional view taken along line IV-IV shown in Figure 2;
Figure 5 is a graph showing a distribution of a reflected position of input light according to a temperature of a heating portion; and
Figures 6 to 9 show a procedure for manufacturing the optical true-time delay apparatus according to the embodiment of the present invention.

## DETAILED DESCRIPTION OF THE PREFERRED EMBODIMENTS

Reference will now be made in detail to the preferred embodiments of the present invention, examples of which are illustrated in the accompanying drawings.

Hereinafter, an optical true-time delay apparatus according to the present invention will be explained in detail with reference to embodiments shown in the accompanying drawings.

There may exist a plurality of embodiments of the optical true-time delay apparatus according to the present invention, and the most preferred embodiment therefor will be explained as follows.

Figure 2 is a sectional view showing an optical true-time delay apparatus according to an embodiment of the present invention.

Referring to the drawing, the optical true-time delay apparatus according to the embodiment of the present invention includes: an optical fiber 150 having a core layer 110 and a cladding layer 100 wrapping the core layer 110, and provided with a taper portion 145 at a certain part of an outer circumferential surface of the cladding layer 150, a distance from the taper portion 145 to the core layer 110 being gradually changed along a length direction of the taper portion 145; a bragg grating 120 formed at a uniform interval in the core layer 110 within the section of the optical fiber 150 in which the taper portion 145 is formed, and having a characteristic that an effective index of refraction thereof is changed according to a variation of temperature; and a heating portion 130 formed on the taper portion along a length direction of the optical fiber 150 so as to wrap a part of the taper portion 145 corresponding to the part where the bragg grating 120 is formed.

Here, the optical fiber 150 has a curved portion which is curved to have a predetermined radius of curvature, and the taper portion 145 is formed at the curved portion. In more detail, the taper portion 145 is formed in a plane shape by removing a part of an outer curved surface 151 of the curved portion of the optical fiber 150. Thusly, the section where the taper portion 145 of the optical fiber 150 is formed has an asymmetrical structure. Furthermore, in the section where the taper portion 145 is formed, a thickness of the optical fiber 150 is changed step by step, and accordingly a distance from the bragg grating 120 formed in the core layer 110 to the taper portion 145 is gradually changed along a length direction of the optical fiber 150. As a result, a distance from the heating portion 130 to the bragg grating 120 is also gradually changed along the length direction of the optical fiber 150. At this time, preferably, the distance from the heating portion 130 to the bragg grating 120 is gradually increased along an ongoing direction of an optical signal passing through the optical fiber 150.

The heating portion 130, on the other hand, is formed as a metal electrode such that a heating value is adjusted according to a size of voltage applied for inducing a change of temperature in the bragg grating 120. Moreover, the core layer 110 is also preferably formed by an optical material which has a thermooptical characteristic such as silica so as to transfer heat generated from the heating portion 130 to the bragg grating 120.

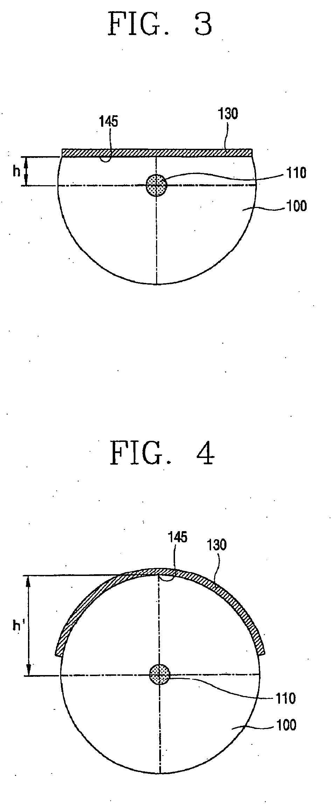

Meanwhile, a structure of the optical true-time delay apparatus according to the embodiment of the present invention can be checked more clearly with reference to Figures 3 and 4. Figure 3 is a sectional view showing a beginning part of the bragg grating 120, and Figure 4 is a sectional view showing an end part thereof.

That is, the distance h from the core layer 110 to the heating portion 130 is very close at the beginning part (z=0) of the bragg grating 120, while a distance h' therebetween is greatly far at the end part (z=L) of the bragg grating 120 by a gradual increase of the distance therebetween along the length direction of the optical fiber 150. Therefore, when heat is generated by applying a voltage to the heating portion 130, an effective index of retraction of the bragg grating 120 is varied according to the distance from the heating portion 130 to the bragg grating 120 formed in the core layer 110.

Now, it will be explained how the optical true-time delay apparatus according to the embodiment of the present invention is operated as follows.

When an optical signal having a predetermined wavelength which includes an RF signal therein is applied through the core layer 110 of the optical fiber 150, the optical signal is reflected at a certain position when it passes through a part of the bragg grating 120 in the core layer 110, thereby returning to the direction that it is applied. This reflected time corresponds to a delay time. At this time, a temperature of the heating portion 130 is changed according to a voltage applied to the heating portion 130 and an effective index of refraction of the bragg grating 120, of which distance from the heating portion 130 is gradually changed, is also varied according to a rate of change of the distance therebetween. That is, the optical true-time delay apparatus using the bragg grating 120 is substantially operated as an apparatus using a chirped bragg grating is.

As a result, an optical wavelength to be reflected is not one, and the length of the optical wavelength is gradually increased according to the thickness of the cladding layer 100 of the optical fiber 150. Furthermore, a distribution of the optical wavelength reflected is varied according to a temperature of the heating portion 130.

A wavelength of the optical signal reflected by the bragg grating 120 of the optical fiber 150 which has such structure can be obtained by using an equation as follows.

$$\lambda_B = 2n_{eff}\Lambda_g$$

Here, $n_{ef}$ is an effective index of refraction of the bragg grating 120, and $\Lambda$ g is a period of the bragg grating 120.

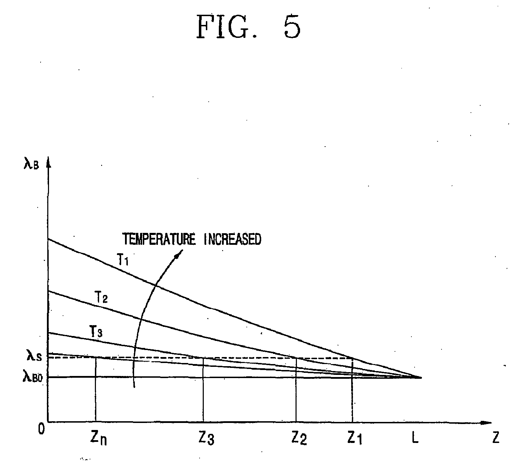

Figure 5 is a graph showing a distribution of a reflected position of an input optical signal according to a temperature of the heating portion. The graph shows a reflected position z according to a change of temperature of the heating portion (i.e., a voltage applying to the heating portion) when applying an optical signal with a predetermined wavelength $\lambda_s$. Here, $\lambda_{B0}$ is a reflected optical wavelength when there is not any change of the temperature of the bragg grating.

For instance, in case of inputting an optical signal with a wavelength $\lambda_s$, when the temperature of the heating portion 130 is $T_1$, the reflected position is $z_1$, and when the temperature thereof is $T_n$, the reflected position is $z_n$. That is, when the temperature is more increased by the voltage applied to the heating portion 130, the optical signal is reflected at a position closer to the begging part of the bragg grating 120. As a result, the delay time is shorter. Therefore, the reflected position of the optical signal applied can be adjusted by adjusting the voltage applied to the heating portion 130 and accordingly by controlling a heating value provided to the bragg grating 120. According to this, the delay time until the input optical signal is reflected can be adjusted by using a relatively simple way, namely, a way for adjusting the voltage.

Now, a method for manufacturing the optical true-time delay apparatus according to the embodiment of the present invention.

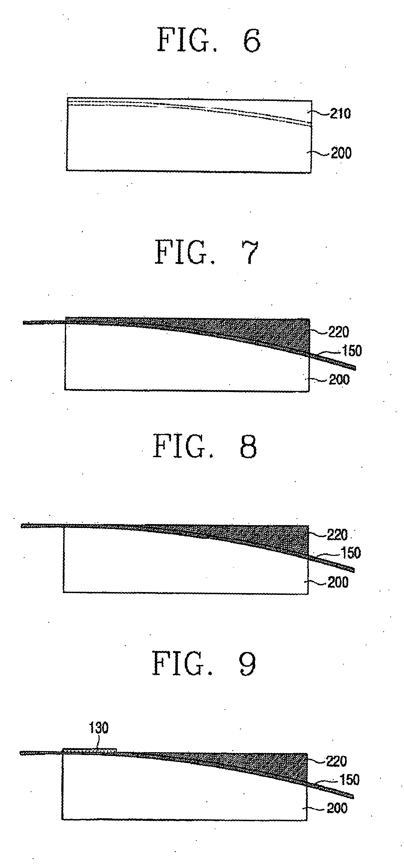

Figures 6 to 9 show a procedure for manufacturing the optical true-time delay apparatus according to the embodiment of the present invention. First, as shown in Figure 6, a groove 210 is formed on a substrate 200 which is made of a material such as quartz, silicon, glass, and the like. The groove 210 has a predetermined radius of curvature in a length direction of the substrate 200, and is extended forwardly to a length direction of the substrate 200.

Next, as shown in Figure 7, the optical fiber 150 having the bragg grating 120 at a uniform interval is inserted into the groove 210, and the groove is then filled with an adhesive agent 220. Accordingly, the optical fiber 150 is fixed with being curved along a bottom surface of the groove 210.

Afterwards, as shown in Figure 8, a part of the cladding layer 100 of the optical fiber 150 wrapping the core layer 110 in which the bragg grating 120 is formed is removed by polishing an upper portion of the formed structure, namely, a part of the optical fiber 150, the adhesive agent, and a part of the substrate 200, and accordingly an asymmetrical taper portion is formed thereby. As a result, the thickness of the cladding layer 100 corresponding to the bragg grating within the optical fiber 150 is gradually changed.

Next, as shown in Figure 9, the heating portion 130 is formed by a metal coding method at a position corresponding to the bragg grating in the taper portion 145 of the optical fiber 150 (i.e., a region including the part where the bragg grating is formed).

On the other hand, an array type true-time delay apparatus can be configured by integrating a plurality of the optical true-time delay apparatuses having such structure on one substrate. In addition, a size of an array type antenna can be greatly reduced by forming various semiconductor devices on the same substrate at the same time.

As described above, in the optical true-time delay apparatus of the present invention which is configured and operated as aforementioned, an asymmetrical taper structure is formed by partially polishing one side surface of the cladding layer which wraps the bragg grating with a characteristic that an effective index of refraction thereof is changed according to a temperature, and the heating portion of which heating value is changed according to an applied voltage is formed at the polished portion. Thereafter, the effective index of refraction of the bragg grating can be varied by the voltage applied to the heating portion. That is, the optical true-time delay apparatus is configured to be able to determine a delay time until the input optical signal is reflected by adjusting the voltage precisely, and accordingly can successively and precisely control the true-time delay of the RF signal electrically without a mechanical movement. In addition, since the structure of the optical true-time delay apparatus is simple and the manufacturing method thereof is also simple, reliability of a product can be improved and a manufacturing cost can be reduced.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

**Claims**

1. An optical true-time delay apparatus comprising:

   an optical fiber composed of a core layer and a cladding layer wrapping the core layer, and having a taper portion formed at a certain part of an outer circumferential surface of the cladding layer, a distance from the taper portion to the core layer being gradually changed along a length direction of the taper portion;
   a bragg grating formed at a uniform interval in the core layer placed within the section in which the taper portion is formed; and
   a heating portion formed on a part of the taper portion corresponding to the part where the bragg grating is formed along a length direction of the optical fiber for thereby wrapping the taper portion.

2. The apparatus of claim 1, wherein the optical fiber has a curved portion which is curved to have a predetermined radius of curvature, and the taper portion is formed on the curved portion.

3. The apparatus of claim 2, wherein the taper portion is formed at an outer curved surface of the curved portion of the optical fiber.

4. The apparatus of claim 1, wherein the taper portion is a plane shape.

5. The apparatus of claim 1, wherein a distance from the heating portion to the bragg grating is gradually increased along an ongoing direction of an optical signal passing through the optical fiber.

6. The apparatus of claim 1, wherein the heating portion is a metal electrode so as to control a heating value thereof according to a voltage power applied.

7. The apparatus of claim 1, wherein the core layer is formed of an optical material with a thermooptical characteristic.

8. The apparatus of claim 7, wherein the core layer is made of a silica material.

9. A method for manufacturing an optical true-time delay apparatus comprising the steps of:

   forming a groove on a substrate, which has a predetermined radius of curvature to a length direction of the substrate and is extended to a depth direction of the substrate;

inserting an optical fiber with a bragg grating formed at a uniform interval into the groove which is thereafter filled with an adhesive agent, and fixing the optical fiber with being curved along a bottom surface of the groove;

polishing a part of the optical fiber corresponding to the bragg grating, the adhesive agent and a part of the substrate and thusly forming a taper portion in the optical fiber; and

forming a heating portion at a part of the taper portion corresponding to the part where the bragg grating is formed.

**10.** The method of claim 9, wherein the substrate is made of one of silicon, quartz and glass.

**11.** The method of claim 9, wherein the heating portion is formed by a metal coating method.

# FIG. 1

RF SIGNAL BEAMS

50a     50b   $\theta_b$   50c     50d

40a    40b    40c    40d

0     $\Delta\tau$     $2\Delta\tau$     $3\Delta\tau$

30a    30b    30c    30d    20

RF SIGNAL ( $f_{RF}$ ) → | ELECTROOPTIC MODULATOR | 10

OPTICAL SIGNAL( $f_0$ )

# FIG. 2

z=0    L    z=L

100   110     III     IV

130   150

145

151

III

120    IV

FIG. 3

FIG. 4

FIG. 5

# FIG. 6

210

200

# FIG. 7

220
150
200

# FIG. 8

220
150
200

# FIG. 9

130

220
150
200

European Patent
Office

**EUROPEAN SEARCH REPORT**

Application Number

EP 05 01 0179

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 011 881 A (MOSLEHI ET AL) 4 January 2000 (2000-01-04) * abstract; figure 4a * * column 6, lines 1-31 * ----- | 1-11 | G02F1/01 G02B6/28 |
| X | US 2003/072531 A1 (PUTNAM MARTIN A ET AL) 17 April 2003 (2003-04-17) * abstract; figure 2 * ----- | 1 | |
| X | WO 00/70379 A (CORNING INCORPORATED) 23 November 2000 (2000-11-23) * abstract; figure 5 * ----- | 1 | |
| A | US 5 809 188 A (TSENG ET AL) 15 September 1998 (1998-09-15) * abstract; figure 2b * ----- | 1-11 | |
| A | US 6 058 226 A (STARODUBOV ET AL) 2 May 2000 (2000-05-02) * abstract; figure 7 * ----- | 1-11 | TECHNICAL FIELDS SEARCHED (Int.Cl.7) |
| A | US 2003/152323 A1 (WAKABAYASHI SHINICHI ET AL) 14 August 2003 (2003-08-14) * abstract; figures 1-5 * ----- | 1 | G02B G02F |
| A | US 4 723 827 A (SHAW ET AL) 9 February 1988 (1988-02-09) * abstract; figure 4 * ----- | 1 | |

The present search report has been drawn up for all claims

| Place of search | Date of completion of the search | Examiner |
|---|---|---|
| The Hague | 23 August 2005 | Faderl, I |

EPO FORM 1503 03.82 (P04C01)

**EP 1 596 243 A1**

## ANNEX TO THE EUROPEAN SEARCH REPORT
## ON EUROPEAN PATENT APPLICATION NO.

EP 05 01 0179

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2005

| Patent document cited in search report | | Publication date | Patent family member(s) | | Publication date |
|---|---|---|---|---|---|
| US 6011881 | A | 04-01-2000 | NONE | | |
| US 2003072531 | A1 | 17-04-2003 | US | 6519388 B1 | 11-02-2003 |
| | | | US | 2003021306 A1 | 30-01-2003 |
| | | | US | 6363089 B1 | 26-03-2002 |
| | | | US | 6229827 B1 | 08-05-2001 |
| | | | US | 6621957 B1 | 16-09-2003 |
| | | | US | 2003035628 A1 | 20-02-2003 |
| | | | AU | 9634101 A | 08-04-2002 |
| | | | CA | 2424032 A1 | 04-04-2002 |
| | | | EP | 1322979 A2 | 02-07-2003 |
| | | | JP | 2004510195 T | 02-04-2004 |
| | | | WO | 0227364 A2 | 04-04-2002 |
| | | | AU | 1127402 A | 08-04-2002 |
| | | | WO | 0227744 A2 | 04-04-2002 |
| | | | AU | 3435201 A | 12-06-2001 |
| | | | CA | 2394910 A1 | 07-06-2001 |
| | | | CN | 1433523 A | 30-07-2003 |
| | | | EP | 1236061 A2 | 04-09-2002 |
| | | | JP | 2003515781 T | 07-05-2003 |
| | | | WO | 0140835 A2 | 07-06-2001 |
| | | | US | 2003185509 A1 | 02-10-2003 |
| | | | AT | 265055 T | 15-05-2004 |
| | | | AU | 757885 B2 | 13-03-2003 |
| | | | AU | 4164400 A | 31-07-2000 |
| | | | BR | 9915953 A | 21-08-2001 |
| | | | CA | 2353413 A1 | 06-07-2000 |
| | | | CN | 1334929 A | 06-02-2002 |
| | | | DE | 69916659 D1 | 27-05-2004 |
| | | | EP | 1145059 A2 | 17-10-2001 |
| | | | JP | 2002533779 T | 08-10-2002 |
| | | | NO | 20012681 A | 31-07-2001 |
| | | | WO | 0039617 A2 | 06-07-2000 |
| | | | US | 2003215185 A1 | 20-11-2003 |
| | | | US | 2003174948 A1 | 18-09-2003 |
| | | | AU | 2603602 A | 15-05-2002 |
| | | | WO | 0237625 A2 | 10-05-2002 |
| | | | AU | 775187 B2 | 22-07-2004 |
| | | | CA | 2353504 A1 | 29-06-2000 |
| | | | CN | 1329722 A | 02-01-2002 |
| | | | DE | 69924002 D1 | 07-04-2005 |
| | | | EP | 1135701 A2 | 26-09-2001 |
| | | | AU | 3996500 A | 12-07-2000 |
| | | | JP | 2003520978 T | 08-07-2003 |
| | | | WO | 0037969 A2 | 29-06-2000 |
| | | | AU | 6291101 A | 17-09-2001 |

EPO FORM P0459

For more details about this annex : see Official Journal of the European Patent Office, No. 12/82

**EP 1 596 243 A1**

## ANNEX TO THE EUROPEAN SEARCH REPORT
## ON EUROPEAN PATENT APPLICATION NO.

EP 05 01 0179

This annex lists the patent family members relating to the patent documents cited in  the above-mentioned European search report.
The members are as contained in the European Patent Office EDP file on
The European Patent Office is in no way liable for these particulars which are merely  given for the purpose of information.

23-08-2005

| Patent document cited in search report | Publication date | Patent family member(s) | Publication date |
|---|---|---|---|
| US 2003072531 A1 | | CA 2402301 A1 | 13-09-2001 |
| | | CN 1439106 A | 27-08-2003 |
| | | EP 1269232 A2 | 02-01-2003 |
| | | JP 2003526812 T | 09-09-2003 |
| | | WO 0167142 A2 | 13-09-2001 |
| WO 0070379 A | 23-11-2000 | AU 4487700 A | 05-12-2000 |
| | | CA 2372905 A1 | 23-11-2000 |
| | | EP 1192492 A1 | 03-04-2002 |
| | | JP 2002544557 T | 24-12-2002 |
| | | WO 0070379 A1 | 23-11-2000 |
| | | US 6697541 B1 | 24-02-2004 |
| US 5809188 A | 15-09-1998 | NONE | |
| US 6058226 A | 02-05-2000 | NONE | |
| US 2003152323 A1 | 14-08-2003 | JP 2003232932 A | 22-08-2003 |
| | | EP 1336879 A2 | 20-08-2003 |
| US 4723827 A | 09-02-1988 | WO 8402005 A1 | 24-05-1984 |
| | | AT 50071 T | 15-02-1990 |
| | | AU 558937 B2 | 12-02-1987 |
| | | AU 1101083 A | 04-06-1984 |
| | | BR 8208104 A | 02-10-1984 |
| | | CA 1251072 A1 | 14-03-1989 |
| | | DE 3280098 D1 | 08-03-1990 |
| | | EP 0124523 A1 | 14-11-1984 |
| | | IL 69969 A | 31-12-1986 |
| | | IT 1168229 B | 20-05-1987 |
| | | JP 60500030 T | 10-01-1985 |
| | | NO 842831 A | 11-07-1984 |

EPO FORM P0459

For more details about this annex : see Official Journal of the European Patent Office, No. 12/82

13